# EUROPÄISCHE PATENTSCHRIFT

(11) **EP 2 781 791 B1**
(45) Veröffentlichungstag und Bekanntmachung des Hinweises auf die Patenterteilung: **30.11.2016**
(21) Anmeldenummer: 14156209.0
(22) Anmeldetag: 21.02.2014
(51) Int. Cl.: F16H 55/14

(54) **Zahnrad**
Gear wheel
Roue dentée

(30) Priorität: 20.03.2013 DE 102013204886
(43) Veröffentlichungstag der Anmeldung: 24.09.2014
(73) Patentinhaber: Bayerische Motoren Werke Aktiengesellschaft, 80809 München (DE)
(72) Erfinder: Abdelfattah, Aschraf, 80939 Muenchen (DE); Hinderer, Thomas, 1100 Wien (AT)

(56) Entgegenhaltungen:
- DE-A1- 10 027 857
- DE-A1-102006 026 568
- US-A- 2 980 966
- US-A- 3 257 860
- US-A- 3 952 546
- US-A- 5 540 112

## Beschreibung

Die Erfindung betrifft ein Zahnrad, beispielsweise für den Antrieb einer Ausgleichswelle einer Hubkolben-Brennkraftmaschine mit den Merkmalen aus dem Oberbegriff des Patentanspruchs 1, und wie es aus der DE102006026568A bekannt ist.

Moderne Fahrzeugantriebe verfügen über mechanische Teilsysteme, welche die Wirkung von freien Massenkräften und -momenten im Hinblick auf akustische Emissionen reduzieren. Hierzu werden ein oder mehrere Unwuchten an einer Ausgleichswelle angebracht. Die dadurch, bei Drehung der Ausgleichswelle entstehenden Massenkräfte und folglich auch -momente wirken denjenigen des Kurbeltriebs einer Hubkolben-Brennkraftmaschine entgegen. Diese Ausgleichswellen werden beispielsweise über Zahnräder gegenläufig zur Kurbelwelle angetrieben. Aufgrund der zu reduzierenden Ordnungen der Massenkräfte und/oder -momente ergibt sich die notwendige Drehzahl der Ausgleichswelle relativ zur Kurbelwelle und damit auch die Übersetzung zwischen Ausgleichswelle und Kurbelwelle.

Im Lastfall, d. h. im gefeuerten Betrieb der Hubkolben-Brennkraftmaschine wirkt die Zündkraft auf die Kolben. Durch die Pleuelstangen wird diese auf die Kurbelwelle übertragen und versetzt diese in Rotation. Allerdings wird die Kurbelwelle nicht nur in Rotation versetzt sondern gleichzeitig auch um die Hoch- und Querachse gebogen. Dieser, auch als "Atmen" der Wange bezeichnete, deformierte Zustand der Kurbelwelle führt zu einer radialen Verlagerung des auf der Kurbelwelle sitzenden Zahnrades zum Antrieb der Ausgleichswelle. Die Rotation der Kurbelwelle wird über die bereits erwähnte Zahnradstufe auf die Ausgleichswelle übertragen. Aufgrund der radialen Verlagerung des Zahnrades auf der Kurbelwelle werden Radial- und Zahnnormalkräfte auf das auf der Ausgleichswelle sitzende Zahnrad übertragen. Folglich erfährt auch das Ausgleichswellenzahnrad eine Verlagerungsbahn, die sich in Form von Lagerkraftspitzen in der Ausgleichswellenlagerung bemerkbar machen. Da auch das Kurbelgehäuse aus einem schwingungsfähigem Kontinuum besteht, wird dieses aufgrund der eben erwähnten Lagerkraftverläufe zu Schwingungen angeregt. Die Amplituden der angeregten Schwingungsformen des Kurbelgehäuses führen zu einer unterschiedlichen Amplitudenauslenkung der einzelnen Eigenmoden des Kurbelgehäuses, das seinerseits wiederum mit dem umgebenden Medium, der Umgebungsluft, in Wechselwirkung steht und damit zu, für das menschliche Ohr wahrnehmbaren, akustischen Emissionen führen kann.

In der Regel werden bei akustischen Auffälligkeiten solcher Ausgleichswellengetriebe folgende Maßnahmen getroffen:
1. Schrägverzahnung für die Zahnräder;
2. Reduzierung des Zahnflankenspiels;
3. Verkleinerung des Zahnmoduls.

Zwei Beispiele für die Verringerung des Zahnflankenspiels sind aus der deutschen Patentschrift DE 199 55 474 C1 und aus der europäischen Patentschrift EP 1 705 405 B1 bekannt. In beiden Patentschriften wird jeweils ein Verfahren zur Einstellung des Verdrehflankenspiels miteinander kämmender Verzahnungspartner mittels einer lösbaren Beschichtung beschrieben, insbesondere für die Antriebszahnräder von Ausgleichswellen einer Hubkolben-Brennkraftmaschine. Die lösbare Beschichtung wird im Zahnzwischenraum zur Spieleinstellung gegeneinander zustellbarer Verzahnungspartner aufgetragen, welche sich beim Betrieb des Ausgleichswellengetriebes wieder von den Zahnflanken löst und anschließend ein optimales Spiel zwischen den Reibpartnern eingestellt ist.

Alle oben genannten Abhilfemaßnahmen sind jedoch in der Regel nur bei vergleichsweise hochfrequenten Geräuschemissionen (Zahnradheulen) einsetzbar. Im Fall einer dreizylindrigen Hubkolben-Brennkraftmaschine handelt es sich jedoch um eine vergleichsweise niederfrequente Anregung, die sich analog zum maximalen Zünddruck von Zylinder 1 verhält. Deshalb kann auch keine der oben genannten Maßnahmen, wie sich in Versuchen herausgestellt hat, hier auch nur im Ansatz die notwendige Abhilfe schaffen.

Weiter ist aus der deutschen Offenlegungsschrift 1 945 264 eine elastische, drehmomentübertragende Abstützung eines Zahnkranzes gegenüber einer Welle bekannt. Die Abstützung erfolgt mit einer Kunststoff- oder Gummischicht, die dadurch gekennzeichnet ist, dass sie unter Ausübung eines allseitigen Drucks zwischen Zahnkranz und Welle angeordnet ist.

Weiter ist die Verwendung eines derartigen, aus der DE 1 945 264 bekannten Zahnrades bei eingangs genannter Problemstellung nicht möglich, da für jedes Zahnrad in der Fertigung ein selektives Verschrauben und damit Vorspannen der zwei inneren Zahnradteile (Nabenteile) erfolgen muss, damit für jeden Belastungsfall eine definierte Steifigkeit des Elastomers eingestellt werden kann. Darüber hinaus führen die Kanten der einzelnen Zahnradbauteile die auf das Elastomer wirken insbesondere bei Impulsbelastung zu Spannungsspitzen, die das Elastomer unweigerlich durch Rissbildung zerstören. Darüber hinaus besteht beim Betrieb eines gattungsgemäßen Zahnrades in einem Schmierstoffnebel die Gefahr der Ablösung des Elastomers von den Zahnradbauteilen, was ebenfalls zur Zerstörung des Zahnrades führt.

Aufgabe der vorliegenden Erfindung ist es, eine Maßnahme aufzuzeigen, mit der sowohl eine niederfrequente als auch eine hochfrequente Anregung durch Kräfte und/oder Kraftimpulse eines Zahnradgetriebes, beispielsweise für ein Ausgleichswellengetriebe einer Hubkolben-Brennkraftmaschine, vermieden werden kann.

Diese Aufgabe wird durch ein Zahnrad mit den Merkmalen aus dem Patentanspruch 1 gelöst.
Aufgrund der Impulse, die beispielsweise von einem Kurbelwellenzahnrad auf das Ausgleichswellenzahnrad bis in die Lagerstellen der Ausgleichswelle, bzw. in die Struktur des Kurbelgehäuses eingeleitet werden und damit zu akustischen Emissionen führen, wird erfindungsgemäß vorgeschlagen, eine Entkopplung vorzunehmen, d. h. den oben beschriebenen Impulsweg zu unterbrechen. Realisierbar ist dies durch das erfindungsgemäß geteilte Zahnrad, wobei für die Dauerfestigkeit, insbesondere bei einem Betrieb in einem Schmiermittelnebel durch den erfindungsgemäßen U-förmigen Querschnitt des Elastomers sichergestellt ist. Dabei wird der Zahnkranz des Zahnrades über eine im Vergleich zu Stahl weichen Elastomerspur auf dem Nabenteil des Zahnrades geführt. Aufgrund des U-förmigen Querschnitts des Elastomers ist es weiterhin möglich, das notwendige Antriebsmoment beispielsweise für eine Ausgleichswelle bereitzustellen. Trotzdem werden die Lagerkräfte durch die verhältnismäßig weiche Radialsteifigkeit des Elastomers um die Kraftspitzen reduziert und damit nicht mehr in das Kurbelgehäuse eingeleitet. Durch die resultierenden, vergleichsweise geringen Lagerkräfte kommt es zu einer massiven, nicht mehr wahrnehmbaren Reduzierung der akustischen Emission.

Vorteilhafte Weiterbildungen der Erfindung sind in den Unteransprüchen beschrieben.

Um die inneren Spannungen im Elastomer für eine gute Langlebigkeit des Zahnrades zu minimieren, ist die Kante am Übergang der Stirnseite des Nabenteils und/oder des Zahnkranzes zum Spalt gemäß Patentanspruch 2 verrundet.

Beste Ergebnisse bezüglich der Langlebigkeit ergaben sich in Versuchen gemäß Patentanspruch 3, wenn die Verrundung einen parabolischen Verlauf zweiter Ordnung aufweist.

Als akustisch besonders vorteilhaft hat sich eine Steifigkeit des Elastomers gemäß Patentanspruch 4 im Bereich von 200 N/mm bis 15.000 N/mm, insbesondere im Bereich von 500 N/mm bis 1000 N/mm, abhängig von der zu tilgenden Anregung, herausgestellt.

Der Spalt weist gemäß Patentanspruch 5 bevorzugt eine radiale Dicke von 2 % bis 30 %, insbesondere 5 % bis 10 % des Zahnraddurchmessers auf.

Bevorzugt ist das Elastomer je nach Belastung gemäß Patentanspruch 6 kraft- und/oder material- und/oder formschlüssig mit dem Nabenteil und dem Zahnkranz verbunden.

Eine besonders gute Dauerhaltbarkeit ergibt sich gemäß Patentanspruch 7 dadurch, dass die U-förmigen Schenkel des Elastomers in radialer Richtung mindestens 20 % der radialen Dicke des Spaltes beträgt. Bevorzugt sind die Schenkel, die sich über die Stirnseiten des Nabenteils erstrecken länger als die Schenkel, die sich über die Stirnseiten des Zahnkranzes erstrecken. Hierdurch wird das Eindringen von Schmiermittelteilchen aufgrund der vorherrschenden Fliehkräfte durch eine Drehung des Zahnrades wirksam entgegengewirkt.

Bevorzugt sind das Nabenteil und/oder der Zahnkranz gemäß Patentanspruch 8 aus einem Sinterwerkstoff, an dem das Elastomer besonders gut haftet.

Bevorzugt ist das Elastomer gemäß Patentanspruch 9 ein Silikonwerkstoff.

Im Folgenden ist die Erfindung anhand eines Ausführungsbeispiels in fünf Figuren näher erläutert.
- Fig. 1: zeigt eine Aufsicht auf ein schematisch dargestelltes Kurbelgehäuse mit einem Kurbeltrieb.
- Fig. 2: zeigt einen Schnitt durch ein halbes erfindungsgemäßes Zahnrad.
- Fig. 3: zeigt eine Aufsicht auf ein erfindungsgemäßes Zahnrad.
- Fig. 4: zeigt in einer Grafik ein Rechenergebnis von einem Zylinderinnendruckverlauf mit zugehörigen Zahnnormalkräften für eine Dreizylinder-Hubkolben-Brennkraftmaschine gemäß dem Stand der Technik.
- Fig. 5: zeigt in einer Grafik die Berechnung aus Fig. 4 jedoch bei Verwendung eines erfindungsgemäßen Zahnrades.

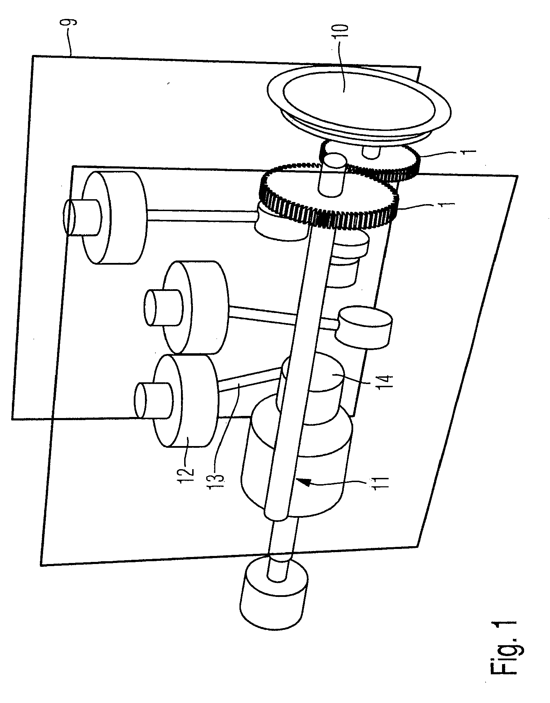

Im Folgenden gelten für gleiche Bauelemente in den Figuren 1 bis 5 die gleichen Bezugsziffern.

Fig. 1 zeigt eine Aufsicht auf ein schematisch dargestelltes Kurbelgehäuse 9, beispielsweise mit einem Kurbeltrieb für eine dreizylindrige Hubkolben-Brennkraftmaschine bestehend aus einer Kurbelwelle 14 mit drei zugehörigen Pleuel 13 und drei Kolben 12. Ferner ist eine Ausgleichswelle 11 vorgesehen, die über ein Zahnradgetriebe, bestehend aus zwei erfindungsgemäßen Zahnrädern 1, von der Kurbelwelle 14 antreibbar ist. Weiter ist stirnseitig an die Kurbelwelle 14 ein Torsionsschwingungsdämpfer 10 angeordnet.

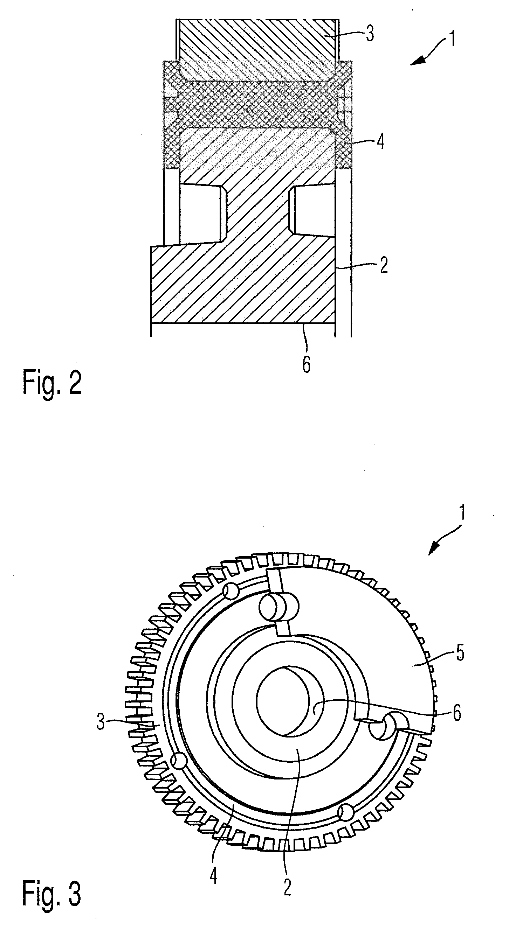

Fig. 2 zeigt einen Schnitt durch ein halbes erfindungsgemäßes Zahnrad 1 für einen Antrieb der in Fig. 1 dargestellten Ausgleichswelle 11. Das Zahnrad 1 weist ein Nabenteil 2 auf, welches mittels einer zentrischen Bohrung 6 auf die Ausgleichswelle 11 und/oder die Kurbelwelle 14 montierbar ist. Weiter weist das Zahnrad 1 ein Zahnkranz 3 auf, der die Verzahnung trägt. Ein Antrieb des Zahnrades 1 kann sowohl nabenteilseitig oder zahnkranzseitig erfolgen. Zwischen dem Nabenteil 2 und dem Zahnkranz 3 ist ein Spalt, der weitgehend mit einem Elastomer 4 ausgefüllt ist.

Erfindungsgemäß ist ein Querschnitt des Elastomers 4 antriebsseitig und/oder abtriebsseitig U-förmig ausgebildet wobei die U-förmigen Schenkel die Stirnseiten des Antriebsteils und/oder des Abtriebsteils zumindest abschnittsweise am Umfang umschließen.

Um innere Spannungen im Elastomer zu eliminieren oder zu reduzieren, weist eine Kante am Übergang einer Stirnseite des Nabenteils 2 und/oder des Zahnkranzes 3 zum Spalt eine Rundung auf, die bevorzugt einen parabolischen Verlauf zweiter Ordnung aufweist.

Um den erfindungsgemäßen Effekt zu erzielen, weist das Elastomer 4 eine Steifigkeit von 200 N/mm bis 15.000 N/mm, insbesondere eine Steifigkeit von 500 N/mm bis 1000 N/mm auf.

Für eine sehr gute bis optimale akustische Dämpfung weist der Spalt eine radiale Dicke von 2% bis 30%, insbesondere eine radiale Dicke von 5% bis 10% eines Zahnraddurchmessers auf.

Um ein Eindringen von Schmiermittelteilchen zwischen den Zahnradbauteilen und das Elastomer 4 zu verhindern ist das Elastomer 4 je nach Anforderung kraft- und/oder material- und/oder formschlüssig mit dem Nabenteil 2 und dem Zahnkranz 3 verbunden.

Bevorzugt erstrecken sich die U-förmigen Schenkel des Elastomers in radialer Richtung mindestens 20 % der radialen Dicke des Spaltes über die Stirnseiten des Nabenteils 2 und/oder des Zahnkranzes 3. Bevorzugt sind die Schenkel, die sich über die Stirnseiten des Nabenteils 2 erstrecken länger als die Schenkel, die sich über die Stirnseiten des Zahnkranzes 3 erstrecken. Hierdurch wird dem Eindringen von Schmiermittelteilchen aufgrund der vorherrschenden Fliehkräfte zwischen dem Elastomer 4 und das Nabenteil 2 und dem Zahnkranz 3 wirksam entgegengewirkt.

Weiter sind das Nabenteil 2 und/oder der Zahnkranz 3 bevorzugt aus einem Sinterwerkstoff ist, an dem das Elastomer 4 besonders gut haftet.

Weiter ist das Elastomer 4 bevorzugt ein Silikonwerkstoff. Unter einem Elastomer 4 werden formfeste, aber elastisch verformbare Kunststoffe verstanden, deren Glasübergangspunkt sich unterhalb der Einsatztemperatur befindet. Die Elastomere können sich bei Zug- und Druckbelastung elastisch verformen, finden aber danach wieder in ihre ursprüngliche, unverformte Ausformung zurück. Elastomere finden üblicher Weise Verwendung als Material für beispielsweise Dichtungsringe, Reifen, Gummibänder, usw. Die bekanntesten Elastomere sind Naturkautschuk und Silikonkautschuk, der hier vorzugsweise zum Einsatz kommt.

Fig. 3 zeigt eine Aufsicht auf das Zahnrad 1 aus Fig. 2. In Fig. 3 ist der Spalt zwischen dem inneren Teil 2 und dem äußeren Teil 3, in dem das Elastomer 4 angeordnet ist, gut erkennbar. Für einen Bogenabschnitt ist das Elastomer 4 durch ein Unwuchtgewicht 5 abgedeckt. Um eine Schallübertragung zwischen dem Zahnkranz 3 und dem Unwuchtgewicht 5 zu vermeiden, ist ein kleiner axialer Spalt zwischen dem Unwuchtgewicht 5 und dem Zahnkranz 3 vorgesehen. Das heißt das Unwuchtgewicht 5 ist in diesem Ausführungsbeispiel ausschließlich am Nabenteil 2 befestigt.

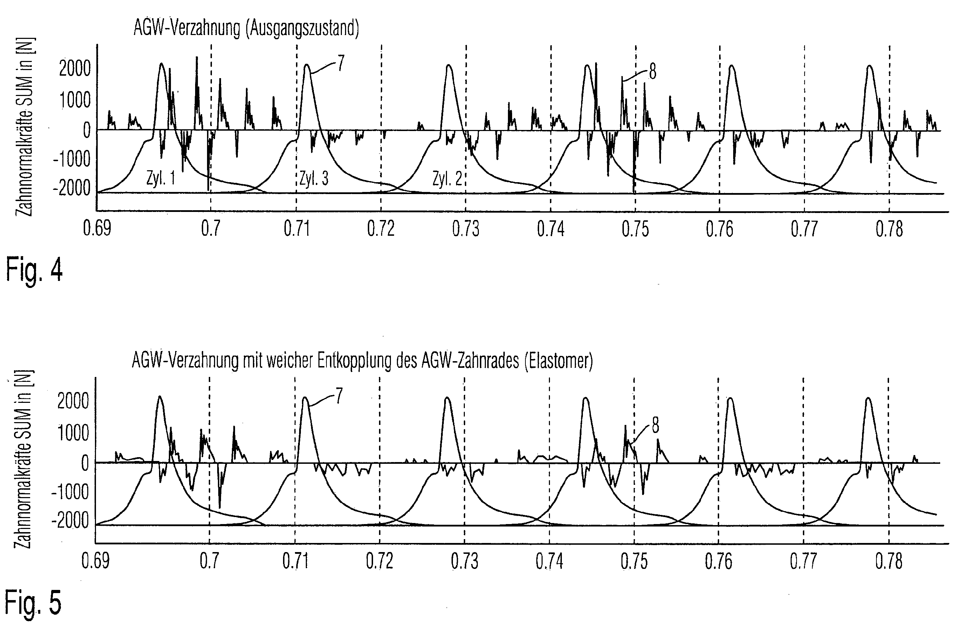

Die Fig. 4 und 5 zeigen jeweils in einer Grafik Berechnungsergebnisse eines Zylinderinnendrucks 7 einer dreizylindrigen Hubkolben-Brennkraftmaschine sowie zugehörige Zahnnormalkräfte 8, die auf Zähne eines AntriebsZahnrades 1 wirken. Über die Y-Achse sind die Zahnnormalkräfte 8 von - 2000 bis 2000 [N] aufgetragen, über die X-Achse ist ein zeitlicher Ablauf von 0,69 bis 0,78 [s] dargestellt, entsprechend sechs Zündungen der dreizylindrigen Brennkraftmaschine.

Fig. 4 zeigt hierbei das Berechnungsergebnis bei Verwendung eines Zahnrades gemäß dem Stand der Technik, Fig. 5 zeigt das Berechnungsergebnis bei Verwendung eines erfindungsgemäßen Zahnrades 1. Die als Fundament dienende Berechnung besteht dabei aus einem kompletten Mehrkörperdynamikmodell, wobei die Kurbelwelle 14, das Kurbelgehäuse und auch das Schwungrad sowie die Ausgleichswelle 11 als schwingungsfähiges Kontinuum berücksichtigt wurden.

In Fig. 4 ist anhand der Zahnnormalkraft 8 eine eindeutige Zuordnung der Zahnnormalkraft 8 auf das Zünden von Zylinder 1 möglich. Die gleichen Berechnungsergebnisse, jedoch für ein erfindungsgemäß ausgestaltetes Zahnrad 1 sind in der Fig. 5 zu entnehmen. Dabei ist eine signifikante Abnahme der Zahnnormalkraft 8 von nicht entkoppelt gegenüber entkoppelt, d. h. mit Elastomer 4 von maximal 2200 N auf 1000 N erkennbar.

Wie bereits dargestellt kommt es durch die erfindungsgemäße Ausgestaltung des Zahnrades 1 zu vergleichsweise geringen Zahnnormalkräften 8, die zu einer nicht mehr wahrnehmbaren Reduzierung der akustischen Emissionen führen. Darüber hinaus wird ein Abbrechen einzelner Zähne des Zahnrades 1 aufgrund der sonst ungedämpft einwirkenden Kraftimpulse sicher vermieden.

Die in den Fig. 4 und 5 dargestellten Berechnungsergebnisse konnten auch durch Messungen am Prüfstand anhand einer realen Dreizylinder-Hubkolben-Brennkraftmaschine untermauert werden.

### Bezugszeichenliste:

- 1.: Zahnrad
- 2.: Nabenteil
- 3.: Zahnkranz
- 4.: Elastomer
- 5.: Unwuchtgewicht
- 6.: Bohrung
- 7.: Zylinderinnendruck
- 8.: Zahnnormalkräfte
- 9.: Kurbelgehäuse
- 10.: Torsionsschwingungsdämpfer
- 11.: Ausgleichswelle
- 12.: Kolben
- 13.: Pleuel
- 14.: Kurbelwelle

## Patentansprüche

1. Ausgleichswellengetriebe einer Hubkolben-Brennkraftmaschine mit einem Zahnrad (1), das koaxial mit einem Spalt in ein Nabenteil (2) und einen Zahnkranz (3) getrennt ist und der Spalt weitgehend mit einem Elastomer (4) ausgefüllt ist, wobei ein Antrieb des Zahnrades (1) nabenteilseitig oder zahnkranzseitig erfolgt, wobei ein Querschnitt des Elastomers (4) antriebsseitig und/oder abtriebsseitig das Nabenteil (2) und/oder den Zahnkranz (3) zumindest abschnittsweise des Umfangs U-förmig umschließt,
**dadurch gekennzeichnet, dass** sich U-förmige Schenkel des Elastomers (4) über Stirnseiten des Zahnkranzes (3) und/oder des Nabenteils (2) erstrecken, wobei eine Kante am Übergang einer Stirnseite des Nabenteils (2) und/oder des Zahnkranzes (3) zum Spalt eine Rundung aufweist, die einen parabolischen Verlauf zweiter Ordnung aufweist.

2. Zahnrad nach einem der Patentanspruch 1,
**dadurch gekennzeichnet, dass** der Elastomer (4) eine Steifigkeit von 200 N/mm bis 15.000 N/mm, insbesondere 500 N/mm bis 1000 N/mm aufweist.

3. Zahnrad nach einem der Patentansprüche 1 oder 2,
**dadurch gekennzeichnet, dass** der Spalt eine radialen Dicke von 2% bis 30%, insbesondere 5% bis 10% eines Zahnraddurchmessers beträgt.

4. Zahnrad nach einem der Patentansprüche 1 bis 3,
**dadurch gekennzeichnet, dass** der Elastomer (4) kraft- und/oder material- und/oder formschlüssig mit dem Nabenteil (2) und dem Zahnkranz (3) verbunden ist.

5. Zahnrad nach einem der Patentansprüche 1 bis 4,
**dadurch gekennzeichnet, dass** die U-förmigen Schenkel des Elastomers in radialer Richtung mindestens 20 % der radialen Dicke des Spaltes beträgt.

6. Zahnrad nach einem der Patentansprüche 1 bis 5,
**dadurch gekennzeichnet, dass** das Nabenteil (2) und/oder der Zahnkranz (3) aus einem Sinterwerkstoff ist.

7. Zahnrad nach einem der Patentansprüche 1 bis 6,
**dadurch gekennzeichnet, dass** der Elastomer (4) ein Silikonwerkstoff ist.

## Claims

1. A balancer shaft transmission of a reciprocating internal combustion engine having a gear wheel (1) which is separated coaxially with a gap into a hub part (2) and a gear ring (3) and the gap is substantially filled with an elastomer (4), wherein the gear wheel (1) is driven on the hub part-side or on the gear ring-side, wherein a cross section of the elastomer (4) surrounds in a Y shape the hub part (2) and/or the gear ring (3) in at least portions of the circumference on the drive side and /or on the output side,
**characterised in that** U-shaped limbs of the elastomer (4) extend over end faces of the gear ring (3) and/or of the hub part (2), an edge at the transition of an end face of the hub part (2) and/or of the gear ring (3) to the gap having a curve which has a parabolic course of the second order.

2. A gear wheel according to claim 1,
**characterised in that** the elastomer (4) has a rigidity of 200 N/mm to 15,000 N/mm, in particular 500 N/mm to 1000 N/mm.

3. A gear wheel according to either claim 1 or claim 2,
**characterised in that** the gap has a radial thickness of 2 % to 30 %, in particular 5 % to 10 % of a diameter of the gear wheel.

4. A gear wheel according to any one of claims 1 to 3,
**characterised in that** the elastomer (4) is joined to the hub part (2) and to the gear ring (3) in a force-locking and/or integrally bonded and/or form-locking manner.

5. A gear wheel according to any one of claims 1 to 4,
**characterised in that** the U-shaped limbs of the elastomer in the radial direction amount to at least 20 % of the radial thickness of the gap.

6. A gear wheel according to any one of claims 1 to 5,
**characterised in that** the hub part (2) and/or the gear ring (3) is produced from a sintered material.

7. A gear wheel according to any one of claims 1 to 6,
**characterised in that** the elastomer (4) is a silicone material.

## Revendications

1. Engrenage d'arbre d'équilibrage d'un moteur à combustion interne à pistons alternatifs comprenant une roue dentée (1) qui est subdivisée coaxialement avec un intervalle en une partie de moyeu (2) et une couronne dentée (3), l'intervalle étant largement rempli d'un élastomère (4), l'entraînement de la roue dentée (1) s'effectuant côté partie de moyeu ou côté couronne dentée, et, la section de l'élastomère (4) entourant au moins par segments, en forme de U, côté entraînement et/ou côté entraîné la partie de moyeu (2) et/ou la couronne dentée (3) sur sa périphérie,
**caractérisé en ce que** les branches en forme de U de l'élastomère (4) s'étendent sur les faces frontales de la couronne dentée (3) et/ou de l'élément de moyeu (2), un bord ayant, au niveau de la transition entre une face frontale de la partie de moyeu (2) et/ou de la couronne dentée (3) avec l'intervalle une courbe ayant la forme d'une parabole du second ordre.

2. Roue dentée conforme à la revendication 1,
**caractérisée en ce que**
l'élastomère (4) a une rigidité située dans la plage de 200 N/mm à 15.000 N/mm, en particulier de 500 N/mm à 1000 N/mm.

3. Roue dentée conforme à l'une des revendications 1 et 2,
**caractérisée en ce que**
l'intervalle a une épaisseur radiale égale à 2% à 30%, en particulier à 5% à 10% du diamètre de la roue dentée.

4. Roue dentée conforme à l'une des revendications 1 à 3,
**caractérisée en ce que**
l'élastomère (4) est relié à la partie de moyeu (2) et à la couronne dentée (3) par une liaison par la force et/ ou par la matière et/ ou par la forme.

5. Roue dentée conforme à l'une des revendications 1 à 4,
**caractérisé en ce que**
la branche en forme de U de l'élastomère s'étend en direction radiale sur au moins 20% de l'épaisseur radiale de l'intervalle.

6. Roue dentée conforme à l'une des revendications 1 à 5,
**caractérisé en ce que**
la partie de moyeu (2) et/ou la couronne dentée (3) est(sont) réalisée(s) en un matériau frité.

7. Roue dentée conforme à l'une des revendications 1 à 6,
**caractérisée en ce que**
l'élastomère (4) est un matériau à base de silicone.
